# EUROPÄISCHE PATENTSCHRIFT

(11) **EP 1 131 618 B1**
(45) Veröffentlichungstag und Bekanntmachung des Hinweises auf die Patenterteilung: **12.10.2005**
(21) Anmeldenummer: 99958102.8
(22) Anmeldetag: 16.11.1999
(51) Int. Cl.: G01N 21/55

(54) **MESSANORDNUNG UND MESSMETHODE ZUM PARALLELEN AUSLESEN VON SPR-SENSOREN**
MEASURING APPARATUS AND METHOD FOR PARALLEL READOUT OF SPR SENSORS
SYSTEME DE MESURE ET METHODE POUR LECTURE PARALLELE DE DETECTEURS A RESONANCE PLASMONIQUE DE SURFACE (SPR)

(30) Priorität: 20.11.1998 DE 19854370
(43) Veröffentlichungstag der Anmeldung: 12.09.2001
(73) Patentinhaber: Graffinity Pharmaceutical Design GmbH, 69120 Heidelberg (DE)
(72) Erfinder: DICKOPF, Stefan, D-69118 Heidelberg (DE); SCHMIDT, Kristina, D-69126 Heidelberg (DE); VETTER, Dirk, D-69120 Heidelberg (DE)
(74) Vertreter: HOFFMANN EITLE
(86) Internationale Anmeldenummer: PCT/EP1999/008977
(87) Internationale Veröffentlichungsnummer: WO 2000/031515

(56) Entgegenhaltungen:
- WO-A-95/22754
- WO-A-97/15819
- DE-A- 19 615 366
- US-A- 5 485 277
- US-A- 5 779 978
- ZIZLSPERGER M ET AL: "MULTISPOT PARALLEL ON-LINE MONITORING OF INTERFACIAL BINDING REACTIONS BY SURFACE PLASMON MICROSCOPY" PROGRESS IN COLLOID & POLYMER SCIENCE,DE,STEINKOPFF VERLAG, DARMSTADT, Bd. 109, 1998, Seiten 244-253, XP000870402 ISSN: 0340-255X in der Anmeldung erwähnt

## Beschreibung

Die Erfindung betrifft eine Meßanordnung zum parallelen Auslesen von SPR-Sensoren (SPR: surface plasmon resonance).

Auf der Suche nach neuen Wirkstoffen ist die kombinatorische Chemie eine erfolgversprechende Methode, um die zu einem Rezeptormolekül passenden Liganden zu finden. Zum Test einer möglichst großen Anzahl von Liganden ist die Miniaturisierung und die Automatisierung der Syntheseabläufe sowie deren Parallelisierung eine wichtige Voraussetzung. Aufgrund der dabei erhaltenen geringen Ligand-Stoffmengen gelten dieselben Anforderungen (Miniaturisierung, Automatisierung und Parallelisierung) ebenso für den Nachweis der Ligand-Rezeptorbindung.
Zu diesem Nachweis kann man als sehr empfindliche Methode die Oberflächenplasmonen Resonanz-Spektroskopie (SPR) benutzen. Dabei wird das an einer dünnen Goldschicht reflektierte Licht detektiert. Bei geeigneter Resonanzbedingung (Einfallswinkel und Wellenlänge des Lichtes und Schichtdicke der Goldschicht) nimmt die Intensität des reflektierten Lichtes ab. Die Lichtenergie wird dann in Ladungsdichtewellen des Elektronengases in der Goldschicht umgewandelt. Diese Ladungsdichtewellen nennt man Plasmonen.
Um die Resonanz zu beobachten, gibt es zwei methodische Ansätze. Entweder benutzt man monochromatisches Licht und zeichnet die Intensität des reflektierten Lichtes in Abhängigkeit des Einfallswinkels auf, oder man hält den Einfallswinkel konstant und variiert die Wellenlänge des Lichtes. In beiden Fällen wird die Lage der Resonanz verschoben, wenn sich der Brechungsindex des Mediums ändert, welches sich auf der dem Lichteinfall abgewandten Seite der Goldschicht befindet.
Diesen Effekt macht man sich bei der biochemischen Analytik zu Nutze. Der Rezeptor oder Ligand wird auf der Goldoberfläche immobilisiert. Nach der Zugabe des Liganden oder Rezeptors wird bei Anlagerung der Moleküle die Resonanzbedingung geändert.
Die einfachste Anordnung zur Messung dieses Effektes ist ein Glasprisma, das mit einem Lichtstrahl beleuchtet und dessen Einfallswinkel variiert wird (siehe z.B. "Biospecific interaction analysis using biosensor technology" Malmqvist, M., Nature 361 (1993) 186-187).
Eine verbesserte Methode ist die parallele Detektion mehrerer Winkel. Dabei wird die Goldoberfläche mit einem leicht divergenten monochromatischen Strahl (~10° Öffnungswinkel) beleuchtet und das reflektierte Licht auf einen ortsauflösenden Lichtdetektor geleitet. Dadurch entsteht eine eindeutige Zuordnung zwischen dem Reflexionswinkel und der Position auf dem Detektor. Diese Bauweise hat den Vorteil, ohne bewegliche Bauteile den interessierenden Winkelbereich zu erfassen. Daher wird diese Art der Detektion in einigen kommerziellen Geräten, wiez.B. nach WO 90/05295 A1 oder EP 797 091 A1, benutzt. Ein Nachteil dieser Anordnungen besteht darin, daß jeweils nur ein präpariertes Goldsensorfeld (eindimensionaler Detektor) oder einige wenige entlang einer Zeile angeordneten Sensorfelder (mit einem zweidimensionalen Detektor) gleichzeitig untersucht werden können. Die gleichzeitige Messung einer zweidimensionalen Anordnung von Sensorflächen ist mit dieser Winkeldetektionsmethode jedoch nicht möglich. Die thermische Equilibrierung nach dem Einbauen der präparierten Goldschicht in derartige Geräte dauert jedoch einige Minuten (mindestens 15 min); die eigentliche Messung dauert dann mindestens solange bis die Molekülanlagerung ins Gleichgewicht gekommen ist, dies kann auch einige Minuten in Anspruch nehmen. Daher sind solche Geräte nur schlecht für die Detektion der Bindung von einer großen Anzahl unterschiedlicher Liganden geeignet, da die Meßzeit und der Aufwand für das Wechseln der Proben verhältnismäßig groß werden.
Einen parallelen Ansatz zur Analyse eines Probenarrays stellt die SPR-Mikroskopie (SPM) dar (siehe: EP 388 874 A2 oder M. Zizisperger, W. Knoll, Progr. Colloid Polym. Sci. 1998, 109, S. 244-253). Hier wird die auf einem Prisma angebrachte Goldoberfläche an verschiedenen Bereichen mit verschiedenen Proben belegt und eine Abbildung der Goldoberfläche unter dem SPR-Winkel auf einen CCD-Chip erzeugt. Während des Meßvorgangs wird der Winkel mit einer mechanischen Scanvorrichtung geändert. Diese Methode ist jedoch auf kleine Objektdurchmesser beschränkt.

Eine neuere SPR-Methode wird in WO 94/16312 A1 offenbart. Hier wird die Detektion der Bindung geringer Stoffmengen mittels Lichtleitfasern realisiert, die teilweise mit einer Goldschicht belegt sind. Aber auch hier besteht das Problem in der Konstruktion eines Gerätes, das nach diesem Prinzip viele Proben parallel untersuchen soll. Ein solcher Array von goldbeschichteten Fasern ist einerseits teuer und sehr empfindlich gegen mechanische Verspannungen, andererseits ist die parallele Herstellung des Arrays nach dortigem Vorschlag technisch nur schwer realisierbar.

Lichtleitfasern werden auch in WO 98/32002 A1 verwendet. Zum Schutz gegen mechanische Beschädigung befindet sich das Faserkabel in einer Pipette. Zur Realisierung eines Arrays wird das. Aneinanderreihen solcher Pipetten vorgeschlagen. Eine Miniaturisierung ist jedoch schwer zu realisieren, insbesondere bei der parallelen Messung vieler verschiedener Proben.

Aus DE 196 15 366 A1 ist ein Verfahren und eine Einrichtung zum simultanen Nachweis physikalischer, biologischer oder biochemischer Reaktionen und Wechselwirkungen an oder in der Oberfläche von Proben bekannt. Alle Proben werden gleichzeitig mit Licht einer Wellenlänge bestrahlt, und das reflektierte Licht wird einem Empfängerarray, z.B. einer CCD-Matrix oder einer Videokamera zugeführt. Die Proben können matrixartig mit den Sensorflächen in einer Ebene auf einer Substratplatte angeordnet sein, die sich wiederum auf einer transparenten Trägerplatte befindet, welche beleuchtet wird. Die elektrischen Signale des Empfängerarrays werden einer Auswerteeinrichtung zugeführt. Nach der Auswertung der Proben mit einer Wellenlänge, kann diese auf einen anderen Wert eingestellt werden.

Aus WO 95/22754 ist eine Analyseeinrichtung bekannt, bei welcher eine Vielzahl von SPR-Analysetrögen matrixförmig angeordnet sind und gleichzeitig ausgemessen werden können. Die Sensorflächen der Analysetröge befinden sich parallel in einer Ebene.

Aus WO 97/15819 ist ein SPR-Messelement bekannt, das als planarer Wellenleiter ausgebildet ist. Auf einer Seite des Wellenleiters ist eine SPR-Sensorfläche vorgesehen, an welcher in dem Wellenleiter geführtes Licht reflektiert wird. Gemäß dem Messprinzip von WO 97/15819 wird polychromatisches Licht über einen großen Einfallswinkelbereich in eine Endfläche des Wellenleiters eingekoppelt, und am Ausgang entstehen eine Vielzahl von Reflektionsbändem, welche jeweils SPR-Information enthalten. Die Bänder entsprechen jeweils einem kleinen Einfallswinkelbereich.

Aus US 5,485,277 ist eine SPR-Anordnung bekannt, bei welcher mehrere Sensorflächen, die auf einem Wellenleiter vorgesehen sind, durch den Wellenleiter bestrahlt werden. Das durch SPR modulierte Licht wird mittels eines CCD-Arrays überwacht.

Der Erfindung liegt die Aufgabe zugrunde, eine Meßanordnung zum gleichzeitigen Auslesen einer Vielzahl von SPR-Sensoren, insbesondere mehr als einhundert oder tausend, anzugeben, bei der der Auslesevorgang innerhalb einer Meßzeit von weniger als dreißig Minuten beendet sein soll.

Gelöst wird diese Aufgabe durch die Messanordnung und das Messverfahren der unabhängigen Ansprüche. Vorteilhafte Ausgestaltungen sind Gegenstand der nachgeordneten Ansprüche.

Um die Aufgabe zu lösen, wird ein besonders ausgebildetes Array in einer Anordnung mit bildgebenden Methoden eingesetzt, um ein gleichzeitiges Auslesen zu ermöglichen. Das zum Einsatz gelangende Array umfaßt eine Vielzahl von Wellenleitern, wobei unter dem Begriff Wellenleiter im Rahmen der Erfindung ein optisches Medium zu verstehen ist, in dem das Licht in mindestens einer Dimension geführt wird und das mindestens zwei parallele Grenzflächen besitzt.

Die Erfindung soll nachstehend anhand schematischer Ausführungs-beispiele näher erläutert werden. Es zeigen:
- Fig. 1: eine Ausführungsmöglichkeit eines Teils eines zum Einsatz gelangenden Wellenleiterarrays,
- Fig. 2: die Zuordnung eines einzelnen SPR-fähigen Sensorelements zu den Pixeln eines CCD-Arrays
- Fig. 3: eine erste Ausführungsmöglichkeit einer Meßanordnung nach vorliegender Erfindung,
- Fig. 4: eine Meßanordnung, die nicht unter die Erfindung fällt,
- Fig. 5: eine weitere Ausführungsmöglichkeit einer Meßanordnung nach vorliegender Erfindung,
- Fig. 6a und b: zwei verschiedene optische Strahlungsverläufe durch das SPR-fähige Sensorgebiet,
- Fig. 7: ein CCD-Bild eines SPR-Wellenleiterarrays,
- Fig. 8: den Intensitätsverlauf eines einzelnen SPR-fähigen Wellenleiters,
- Fig. 9: die Verschiebung eines Intensitätsverlaufes bei unterschiedlicher Probenkonzentration und
- Fig. 10a und b: Den Unterschied zwischen der Beleuchtung des Wellenleiterarrays 10 mit divergentem Licht nach einer Ausführungsform gemäß Fig. 4 und parallelem Licht nach Fig. 3 und Fig. 5.

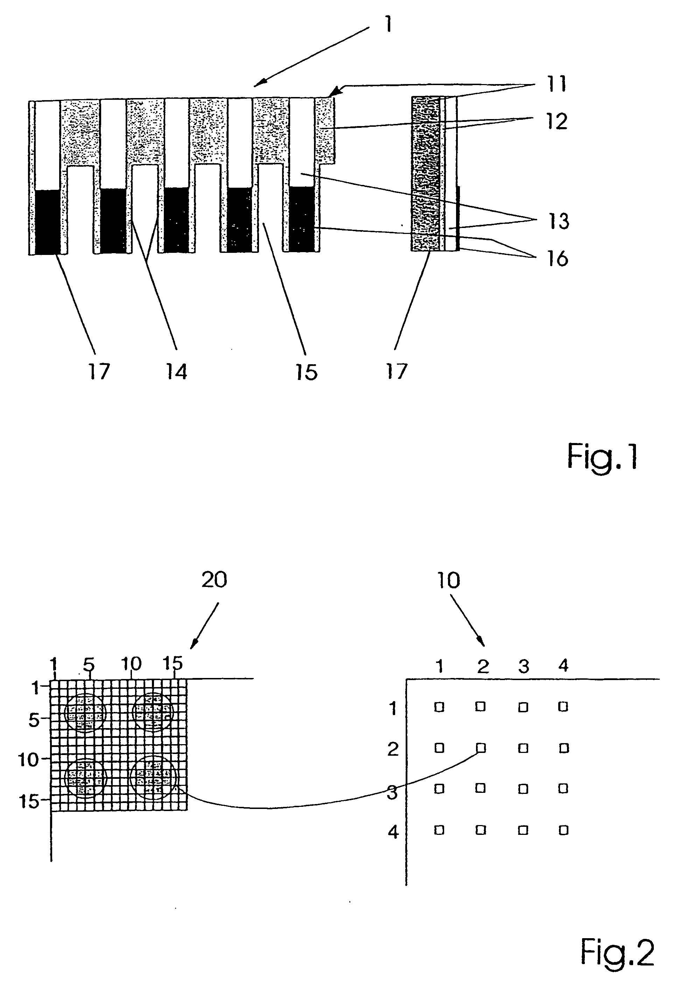

Im Rahmen der Erfindung gelangt vorteilhaft ein planarer SPR-Sensor 1 zum Einsatz, der vermittels bekannter Silizium-Halbleitertechnologien herstellbar und zu einem Wellenleiterarray angeordnet ist. In Fig. 1 ist ein Teil eines solchen Wellenleiterarrays dargestellt. Ein Siliziumwafer 11 wird mit einer SiO₂-Schicht 12 versehen, die als optischer Puffer gegenüber der wellenleitenden Schicht 13 und dem Siliziumbasismaterial 11 dient. Der Wellenleiter besteht aus einer Siliziumoxynitrid-Schicht (SiON) 13, die eine Dicke bis herab zu etwa 10 µm aufweist. Die Siliziumoxynitrid-Schicht 13 wird durch einen Trockenätzprozeß so strukturiert, daß parallele Streifen 14 mit Breiten zwischen 10 µm bis 2000 µm und Abständen zwischen 10 µm und 5000 µm entstehen. Nach der Strukturierung der Wellenleiterstreifen 14 wird der gesamte Wafer durch eine nicht dargestellte Abdeckung bis auf die Bereiche, die in einem späteren Prozeß die SPR-fähige Metallschicht 16 tragen sollen, geschützt. Anschließend werden die im vorangegangenen Prozeßschritt ungeschützten freien Stellen des Wellenleiters mit einer Metallschicht, die in ihrer Dicke den Anforderungen der SPR-Messung angepaßt ist, beschichtet. Die übrige Abdeckung des Wafers wird entfernt. Je nach verwendeter Technologie zum Einbringen der kammartigen Ausnehmungen 15 in den Trägerkörper, können diese Ausnehmungen vor oder nach dem Aufbringen genannter Metallschicht erzeugt werden.
Die beschriebene Technologie erlaubt, mehrere parallele Anordnungen von Wellenleiterstrukturen auf einem Wafer unterzubringen. Mittels Ätzen von Silizium oder durch Zersägen des Siliziumwafers werden die mehrfach vorhandenen, parallelen Anordnungen von Wellenleiterstrukturen vereinzelt. Die räumliche Trennung der einzelnen Wellenleiter untereinander an dem Ende, an dem sich der SPR-Sensor befindet, kann durch naßchemisches Ätzen des Siliziums oder einen Sägeprozeß realisiert werden. Eine andere Variante der Herstellung von Wellenleitern besteht in der Möglichkeit, Polymere in dünnen Schichten z.B. durch Aufschleudern auf ein Substrat herzustellen. Die in gelöster oder nicht ausgehärteter Form vorliegenden Polymere (z.B. PMMA, Polycarbonat, UV-härtende Klebstoffe oder siliziumhaltige Polymere (Cyclotene oder ORMOCERE)) werden auf ein Trägermaterial aufgeschleudert oder vergossen. Die Brechzahl des Trägermaterials muß kleiner sein, als die des aufzutragenden Polymers, der später den Wellenleiter darstellt. Bei Verwendung UV-härtender Polymere erfolgt nach dem gleichmäßigen Schichtauftrag ein Herauslösen der unbelichteten Bereiche, so daß schmale parallele Polymer-Streifen auf dem Träger erhalten bleiben.

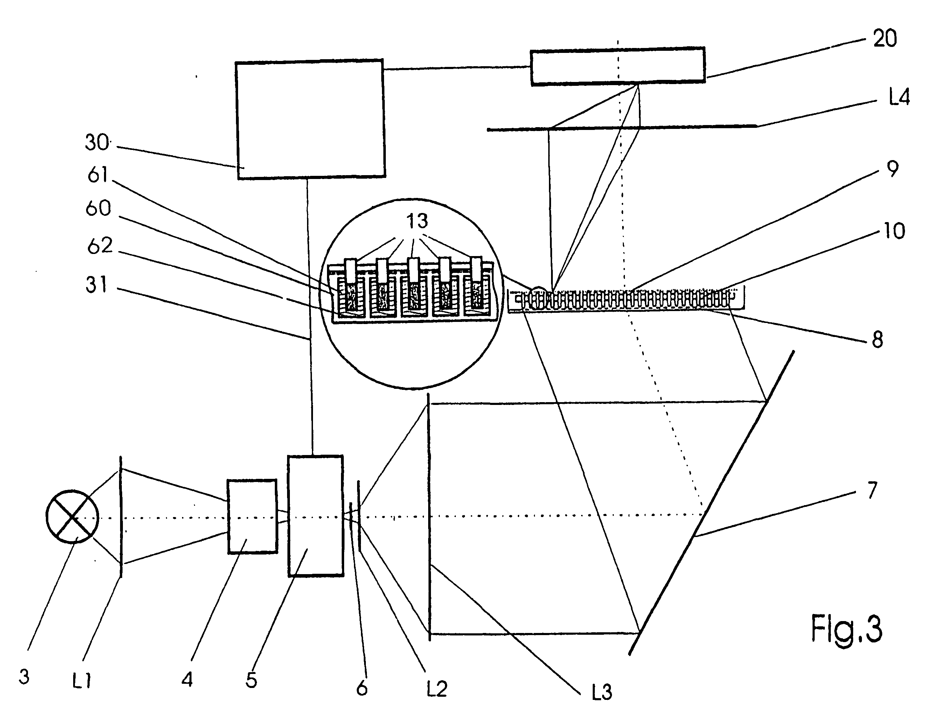

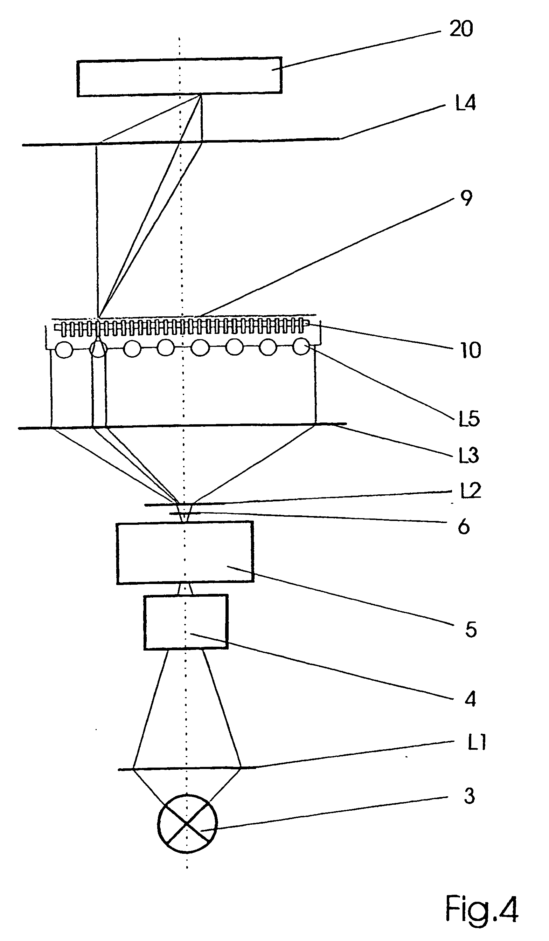

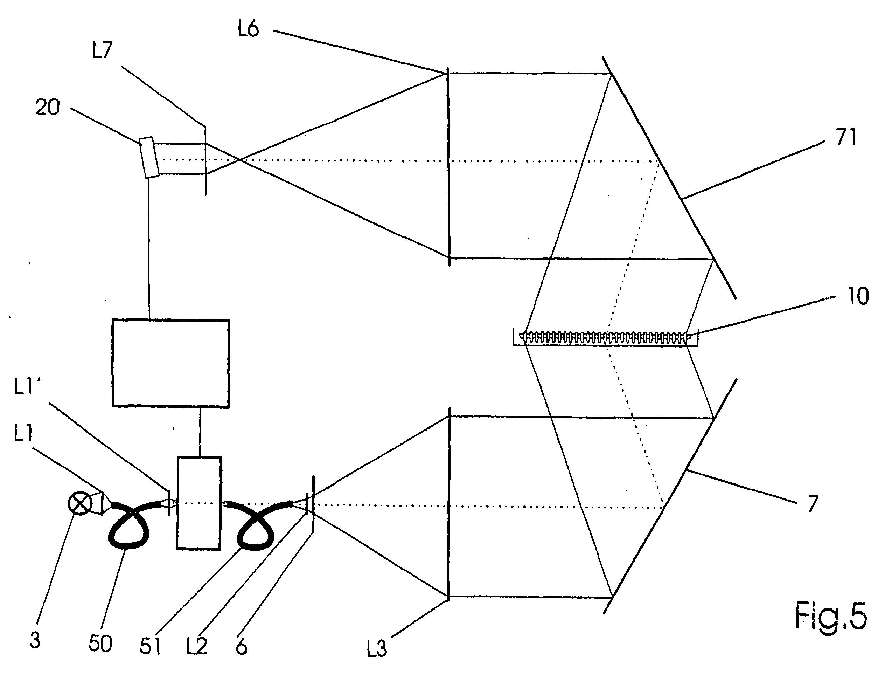

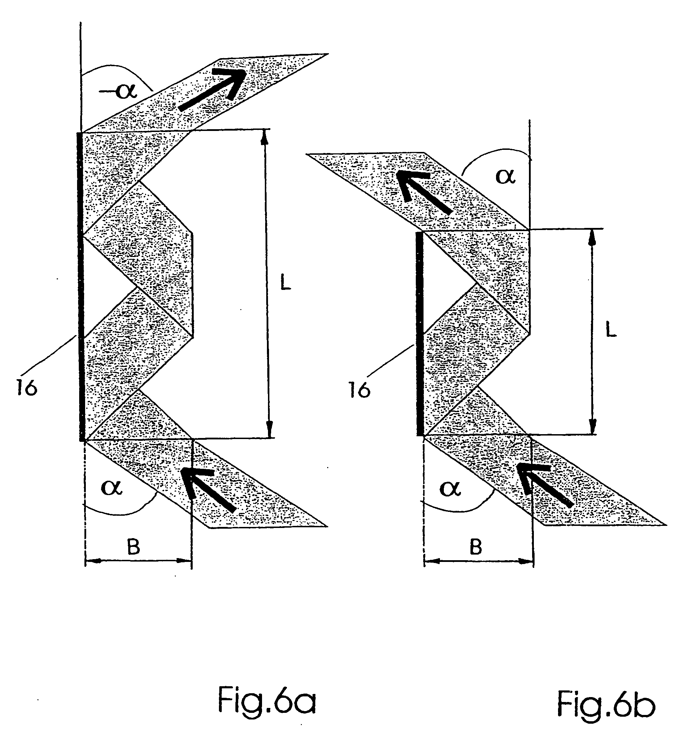

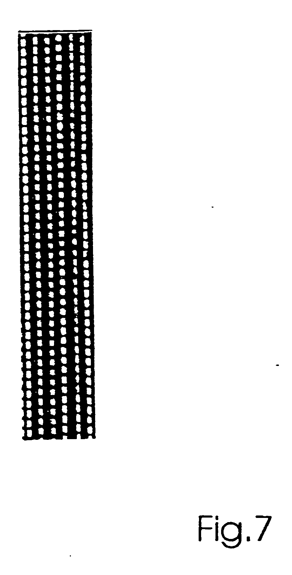

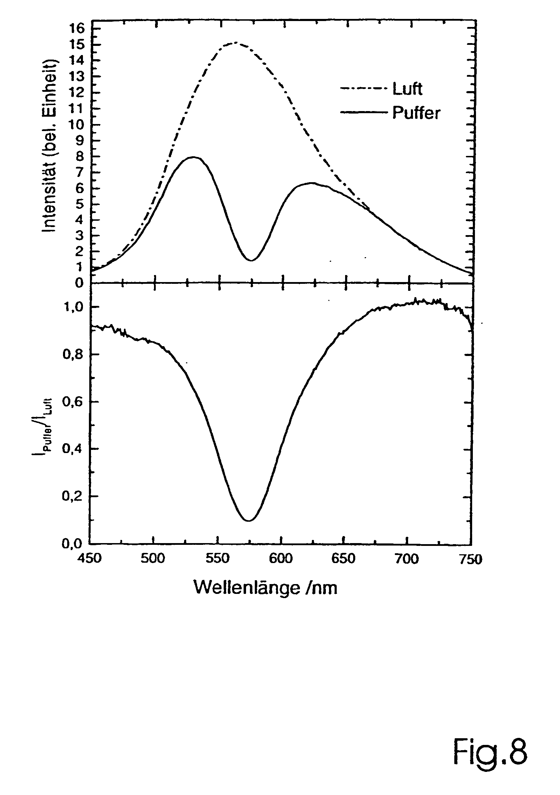

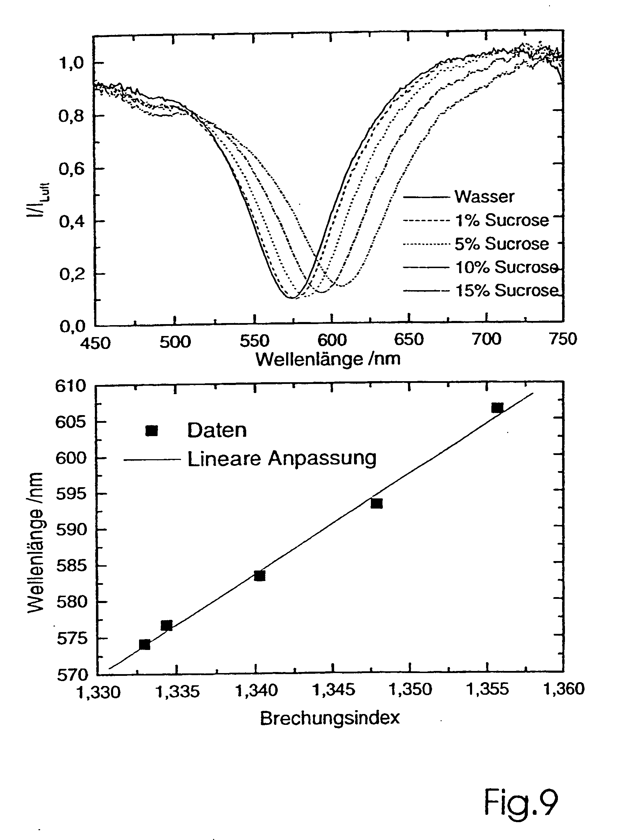

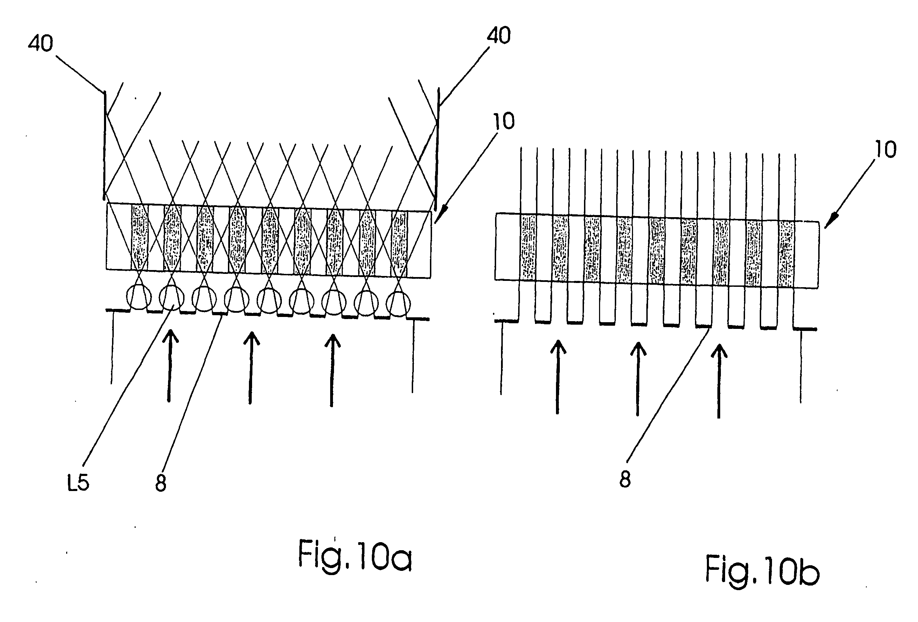

Andere Polymere können durch Prägen oder andere Replikationstechniken in die Streifenform gebracht werden, wobei das verbleibende Material an den Stellen, an denen kein Licht geführt werden soll, entsprechend dünn dimensioniert sein muß. Nach der Strukturierung der Wellenleiterstreifen wird auch hier der gesamte Wafer durch eine Abdeckung geschützt, bis auf die Bereiche, die die SPR-fähige Metallschicht tragen sollen. Im nächsten Schritt werden diese freiliegenden Bereiche mit der SPR-fähigen Metallschicht 16 beschichtet und im Anschlußdaran werden die abgedeckten, übrigen Gebiete von der Schutzschicht befreit.
Die beschriebenen Möglichkeiten erlauben es, sehr viele Wellenleiter auf einem Wafer parallel herzustellen. Nach der Fabrikation der Wellenleiter mit den SPR-Sensorgebieten werden aus den prozessierten Wafern einzelne Streifen, bestehend aus vielen parallelen Wellenleitern, durch Trennverfahren, z. B. Zersägen, präpariert. Durch den Vereinzelungsprozeß entstehen neue Stirnflächen 17, die so präpariert werden, daß dort eine Ein- oder Auskopplung von Licht möglich ist.
Mit den beschriebenen Möglichkeiten gelingt es, planar sehr viele SPR-Sensoren in einer Reihe angeordnet herzustellen. Für die Realisierung eines Arrays von Sensoren werden mehrere dieser Streifen nach Fig. 1 hintereinander gestapelt angeordnet. Ein solches Array kann nach der Montage in einem Bereich außerhalb der SPR-fähigen Metallschichten in ein Polymer eingegossen werden, um dem SPR-Wellenleiterarray zusätzlichen Halt zu geben. Die Anordnung und der Abstand der einzelnen SPR-fähigen Sensoren kann entsprechend der Anordnung und des Abstands der Kavitäten einer vorzulegenden Mikrotiterplatte 60 (siehe Fig. 3) erfolgen. In einem solchen Fall wird der SPR-Wellenleiterarray für Messungen oder zur Beschichtung der SPR-fähigen Schichten 16 mit der Mikrotiterplatte 60, die die zu charakterisierenden Proben 61 trägt, in Kontakt gebracht. Dabei wird das SPR-Wellenleiterarray soweit in die Mikrotiterplatte 60 eingebracht, bis die SPR-fähigen Metallbereiche von den Proben 61 vollständig benetzt werden. Die einzelnen, vertikal angeordneten Wellenleiter sind in der Horizontalen in einem Abstand eines beliebigen Mikrotiter-Formats anordenbar.
Ein Wellenleiterarray der beschriebenen Art kommt in einer nachfolgend an Hand von Fig. 3 beschriebenen möglichen ersten Anordnung zum Einsatz.
Von dem weißen Licht einer Halogenlampe 3 wird nach Durchlaufen einer geeigneten Strahl-Anpassungsoptik (L1), einem im Beispiel eingesetzten IR Filter 4 zur Schonung der optischen Bauelemente und einem Monochromator 5 nur Licht einer Bandbreite von etwa 0,5 bis 5 nm transmittiert. Alternativ kann die Wellenlängenselektion auch mit einem Filterrad durchgeführt werden, wobei eine entsprechende Anzahl von Filtern mit ähnlicher Bandbreite erforderlich sind. Danach erfolgt im Beispiel eine Selektion der Polarisationsrichtung durch einen Polarisator 6 für TM Wellen bezüglich der SPR-fähigen Schichten 16 der eingesetzten Lichtwellenleiter 13. Eine Strahlaufweitungsoptik (L2, L3) sorgt dann für eine parallele Beleuchtung des ganzen Wellenleiterarrays, im Beispiel über einen Umlenkspiegel 7, der so angebracht ist, daß das Licht in die Wellenleiter 13 unter einem Winkel von 70° bis 90° bezüglich der Normalen der Goldschicht der Wellenleiter einfällt, denn nur Licht in diesem Winkelbereich kann die Plasmonenresonanz anregen. Die Verwendung eines Umlenkspiegels dient hier lediglich eines kompakteren Aufbaus der Meßanordnung. Alternativ könnte auch direkt unter diesem Winkel eingestrahlt werden. Eine im Beispiel nach Fig. 3 vorgesehene Mehrfachlochmaske 8, die vielgestaltig ausgeführt sein kann, schattet die Bereiche ab, hinter denen sich kein Wellenleiter befindet, um Streulicht, das auf irgendwelchen ungewollten Wegen zu einem weiterhin vorgesehenen Detektor gelangen könnte, im voraus zu vermeiden. Ist eine andere, technisch aufwendigere Art der geordneten parallelen Anbringung und Fixierung einer Vielzahl von Wellenleitern, bspw. von kommerziell verfügbaren mit einem Kemdurchmesser von ca. 200 µm, vorgesehen, bspw. durch ein Einbetten einzelner Wellenleiterabschnitte in einen gemeinsamen Träger, was ebenfalls im Rahmen der Erfindung liegt, so kann für das eingesetzte Trägermaterial ein nichttransparentes oder ein mit einer nichttransparenten Beschichtung versehenes Material eingesetzt sein, wodurch die vorstehend genannte Mehrfachlochmaske 8 entfallen kann. Die Wellenleiter selbst befinden sich mit ihrem sensitiven Bereich in einer Flüssigkeit, die ausgewechselt werden kann, um Referenzmessungen in unterschiedlichen Lösungen durchzuführen, um die Zielmoleküle auszutauschen oder um Waschvorgänge zu tätigen. Am zum sensitiven Wellenleiterbereich abseitigen Ende der Wellenleiter tritt das Licht in dem vom Betrag her gleichen Winkel aus, in dem es von der anderen Seite eingestrahlt wurde (vgl. Fig. 6). Im Rahmen der Erfindung ist den. lichtaustrittsseitigen Wellenleiterabschnitten weiterhin ein Mittel 9 zugeordnet, das eine Streuung des aus den Wellenleitern austretenden Lichtes bewirkt. Dies kann bspw. durch eine separat anbringbare Streuscheibe, eine geeignete Beschichtung o.ä. realisiert sein. Durch dieses streuende Mittel 9 wird das Licht diffus gestreut. Dieses stark divergente Licht wird direkt mit dem Objektiv L4 auf einen CCD Chip 20 abgebildet. Das Objektiv L4 ist dabei so auszulegen, daß es das gesamte Wellenleiterarray erfaßt, wobei jedoch nur ein kleiner Teil des aus einem Lichtleiter emittierten Lichtes nachgewiesen werden kann. Um diese geringen Lichtmengen zu detektieren, wird im Beispiel eine gekühlte hochempfindliche CCD-Kamera 20 eingesetzt. Die dabei erforderliche Belichtungszeit kann bis zu einigen Sekunden betragen.
Im Rahmen der Erfindung ist vorgesehen, daß das aus einem einzelnen Wellenleiter austretende Licht auf mehrere CCD-Pixel gleichzeitig abgebildet wird, was zu einer Steigerung der Nachweisgenauigkeit führt. So ist im Beispiel die Abbildung auf mehrere Kamerapixel vorgesehen, denn ein CCD-Chip besitzt eine sehr viel größere Anzahl von Pixeln als das hier vorgesehene Wellenleiterarray an einzelnen Wellenleitern aufweist. Im Rahmen der Erfindung wird eine Bildverarbeitungssoftware eingesetzt, die eine Zuordnung des Bereiches von mehreren CCD Pixeln zu einem einzelnen Wellenleiter schafft. Dies wird in Fig. 2 schematisch angedeutet, z.B. wird dem Wellenleiter 2,2 der Pixelbereich {(11,12), (11,13), ..., (14,13)} zugeordnet, d.h. der Bereich des CCD-Chips 20, auf den die Abbildung des Wellenleiters 2,2 erfolgt, umfaßt 12 Pixel. Diese Zuordnung wird in einem Computer 30 abgespeichert und bleibt während der gesamten folgenden Messung erhalten, denn das Array wird im weiteren nicht mehr bewegt. Ein schneller Programm-Algorithmus summiert über diese, jeweils einem Wellenleiter zugeordnete Kamerapixel-Bereiche, so daß zu jedem Wellenleiter ein einzelner Intensitätswert erhalten und abgespeichert wird. Danach wird die Wellenlänge des im Beispiel von unten eingestrahlten Lichtes um ca. 1 nm mit Hilfe des durch den Computer 30 angesteuerten Monochromators 5 verschoben und der nächste Intensitätswert für alle Wellenleiter erhalten. Dadurch erhält man für jeden Wellenleiter ein spezifisches Intensitätsspektrum. Um die Meßzeit zur Aufnahme eines solchen Spektrums zu optimieren, wird die Belichtung der CCD Kamera sofort wieder gestartet, nachdem die Daten bei der letzten Wellenlänge im Computerspeicher angelangt sind und über die Steuerleitung 31 eine neue Wellenlänge an einem durch einen Schrittmotor ansteuerbaren Monochromator 5 eingestellt ist. Die Computer-Summation über die Pixelbereiche kann dann während der Belichtungszeit für die neue Wellenlänge vorgenommen werden. Bei ausreichend langer Belichtungszeit ist die Rechenzeit für die Summation vernachlässigbar. Für jede Wellenlänge ist der Zeitaufwand im wesentlichen durch die Belichtungszeit gegeben, die im Beispiel etwa 5 Sekunden beträgt. Für ein Spektrum von 200 nm sind damit 16 Minuten erforderlich. Für eine Bestimmung der am jeweiligen SPR-Sensor der einzelnen Wellenleiter angelagerten Moleküle ist nun nicht das absolute Intensitätspektrum einer einzelnen Messung, sondern die Differenz der Minima der Intensitätsspektren bei einer Messung in reiner Pufferlösung zu einer zweiten Messung in Anwesenheit des Zielmoleküls notwendig. Erst diese Wellenlängenverschiebung erlaubt, eine Aussage über die Anlagerung von Molekülen zu treffen. Die Abfolge von Referenzmessung und Probenmessung wäre danach innerhalb von 32 min für sämtliche beleuchteten Wellenleitersensoren möglich.
Eine weitere Anordnung, welche nicht unter die Erfindung fällt, die die erforderlichen Meßzeiten reduziert, ist in Fig. 4 schematisch dargestellt. Da der zeitlimitierende Faktor die Belichtungszeit ist, kann durch größere Lichtmengen in den Wellenleitern die Meßzeit verkürzt werden. Dazu kann zum einen etwa eine stärkere Lichtquelle 3, wie z.B. eine Xe-Bogenlampe, eingesetzt werden. Wie in der nach Fg. 3 beschriebenen Anordnung durchläuft das Licht zunächst einen einen IR-Filter 4, einen Monochromator 5 und einen Polarisator 6. Eine Strahlaufweitungsoptik L2, L3 sorgt dann für eine parallele Beleuchtung des Wellenleiterarrays 10, dem in dieser Ausführungsform jedoch Kugel- oder Gradientenlinsen L5 vorgeordnet sind. Um sämtliche Wellenleiter zu durchleuchten, sind im dargestellten Beispiel nach Fig. 4 allerdings mehrere Neupositionierungen des Wellenleiterarrays 10 bezüglich der vorgesehenen Linsen L5 notwendig. Es liegt jedoch ebenso im Rahmen der Erfindung, jedem Wellenleiter eine separate Linse zuzuordnen, die bspw. auch baulicher Bestandteil der betreffenden Mikrotiterplattenböden 62 sein können.
Das parallele Licht wird dann durch die Linsen L5 in die bspw. mit Gold beschichteten Wellenleiter derart fokussiert, daß im sensitiven Bereich des Wellenleiters die divergierenden Strahlen die vorgesehene Metallbeschichtung des Wellenleiters unter anderen Winkeln auch unter dem Winkel treffen, der den Nachweis der SPR ermöglicht. Mit den im Beispiel vorgesehenen Linsen L5 wird gegenüber der in Fig. 3 beschriebenen Beleuchtung etwa die hundertfache Lichtintensität in die Wellenleiter eingekoppelt. Die Eintrittsfenster 17 der Wellenleiter sind im Beispiel im Fokus der Linsen positioniert, d.h. in einem Abstand von einigen 100 µm.
Dabei ist wieder darauf zu achten, daß kein Licht am Wellenleiter vorbei, etwa durch irgendwelche Zwischenräume oder transparente Bereiche, in den Raum des Lichtaustritts aus den Wellenleitern gelangt. Dies kann auch hier durch das Vorsehen oben beschriebener Mittel, bspw. einer Mehrfachlochmaske 8, vermieden werden. Am lichtaustrittsseitigen Ende der Wellenleiter verläßt das Licht wieder divergent die Lichtwellenleiter und wird ebenfalls mit Hilfe eines streuenden Mittels 9 und mit einem Objektiv L4 auf einen CCD-Chip 20 abgebildet.
Die weitere Zuordnung und Auswertung der Lichtintensitäten, die einem einzelnen Lichtwellenleiter zugeordnet sind, erfolgt wieder, wie zu Fig. 3 beschrieben. Für eine einzelne Wellenlänge kann der Zeitaufwand aufgrund der stärkeren Lichtintensität dann etwa auf 1 Sekunde reduziert werden. Beschränkt man sich z.B. auf ein Spektrum von sechzig Wellenlängen, benötigt man für alle parallel gemessenen Spektren im Beispiel eine Minute. Damit ist es z.B. möglich, kinetische Bindungsstudien mit einer großen Anzahl von Liganden gleichzeitig durchzuführen.
Den Unterschied zwischen der Beleuchtung des Wellenleiterarrays 10 mit divergentem Licht nach Fig. 4 und parallelem Licht nach Fig. 3 soll durch Fig. 10a und Fig. 10b demonstriert werden. Hier sind die Randstrahlen nach Durchlaufen der Mehrfachlochmaske 8 vor dem Hintergrund einer Sensorzeile dargestellt. Im divergenten Fall (Fig. 10a) überstreichen die Randstrahlen mehrere Meßbereiche, so daß nach Austritt der Randstrahl nicht mehr einem einzelnen Meßbereich zugeordnet werden kann: Daher müssen bei Beleuchtung mit divergentem Licht mindestens am Rand des Sensorgebietes Grenzflächen 40 eingeführt werden, die eine Totalreflexion gewährleisten. Bei Beleuchtung mit parallelem Licht (Fig. 10b) werden diese Grenzflächen nicht benötigt. Der Lichtstrahl wird hierbei allein durch Totalreflexion an der Sensorfläche und der gegenüberliegenden Grenzfläche geführt. Der Lichtstrahl durchdringt hier die Wellenleiter von vornherein in einem für die SPR-Resonanz geeigneten Winkel. Wenn es nun gelingt, das gesamte parallel austretende Licht auf einen CCD Detektor abzubilden, ist ebenfalls eine Intensitätssteigerung und damit eine Verkürzung der Meßzeit erreichbar. Hierbei ist jedoch im Gegensatz zu Fig. 3 der Winkel des eingestrahlten Lichtes fest definiert.
Eine aufwendigere Ausführungsform, die nach diesem Prinzip mit vollständig parallelem Strahlengang arbeitet und zusätzlich verbesserte Abbildungsleistungen aufweist (geringere Randabschattung, geringere Streulichtempfindlichkeit) ist in Fig. 5 dargestellt. Hier wird das Licht durch eine Lichtleitfaser 50 über ein optisches Abbildungssystem L1, L1' zum Monochromator 5 und durch eine weitere Lichtleitfaser 51 zu einer Strahlaufweitungsoptik L2, L3 geführt. Dies hat den Vorteil, daß die Beleuchtungsstrahlführung unabhängig von der Lichtein- und-auskopplung am Monochromator 5 justiert werden kann. Die Beleuchtung des Wellenleiterarrays 10 erfolgt ebenso wie nach Fig. 3 beschrieben mit einem aufgeweiteten parallelen Strahlenbündel in einem Winkel unter dem die Plasmonenresonanz erwartet wird. Dabei kann optional wie in Fig. 3 eine in Fig. 5 nicht dargestellte Lochmaske eingesetzt sein. Beim Austritt des Lichtes aus dem Sensor tritt dieses entweder parallel versetzt (bei einer geraden Anzahl von Reflexionen, vgl. Fig. 6b) und somit unter dem Winkel α aus, unter dem es eingetreten ist. Bei einer ungeraden Anzahl von Reflexionen (Fig. 6a) tritt es unter dem Winkel -α aus. Die Länge L und Breite B des SPR-fähigen Wellenleiters sind im Beispiel nach Fig.5 speziell so dimensioniert, daß die Anzahl der Reflexionen ungerade ist und somit das Licht ausschließlich in Richtung eines zweiten Umlenkspiegels 71 austritt. Im Gegensatz zu Fig. 3, bei der mit einer Streuschicht die Abbildung auf eine CCD Kamera realisiert ist, wird hier die Parallelität des austretenden Lichtes ausgenutzt um den Lichtweg der Beleuchtung praktisch umzukehren: Über eine langbrennweitige achromatische Sammellinse L6 (z.B. f=1000 mm) mit großem Durchmesser und einem geeigneten Objektiv L7 (z.B. f=100 mm) wird die Fläche des Sensorarrays auf den CCD Chip teleskopartig abgebildet. Da die abzubildende Oberfläche des Sensorarrays 10 nicht senkrecht zur optischen Achse der Anordnung steht, würde bei einer herkömmlichen Kamera, bei der das Objektiv parallel zum CCD-Chip steht, aufgrund nicht ausreichender Tiefenschärfe nur eine Linie des Objekts scharf abgebildet werden. Daher muß bildseitig der CCD-Chip 20 ebenfalls zur optischen Achse verkippt sein, wie in Fig. 5 angedeutet, um über die ganze Sensorarrayfläche 10 eine scharfe Abbildung zu gewährleisten. Dies kann dadurch realisiert werden, daß die CCD-Kamera mit einem nicht dargestellten Goniometer gegenüber dem Objektiv justiert wird.
Ein weiterer Vorteil der teleskopischen Abbildung ist die geringe Streulichtempfindlichkeit, denn nur Licht, das unter dem Detektionswinkel aus der Objektebene austritt, wird auf den CCD-Chip abgebildet. Fig. 7. zeigt eine scharfe Abbildung eines Sensorarrays 10, erzeugt durch eine Strahlführung gemäß Fig. 5. Für jede Wellenlänge wird ein solches Bild detektiert und im Computer 30 wird, wie zu Fig. 2 beschrieben, das Intensitätsintegral über einen Sensorbereich gebildet. Für jeden einzelnen Sensor wird auf diese Weise ein Intensitätseinbruch, der bei Oberflächenplasmonenresonanz entsteht, im Spektrum detektiert, wie es in Fig. 8 für einen einzelnen exemplarisch gezeigt ist. Die gestrichelte Kurve im oberen Teilbild von Fig. 8 zeigt das Spektrum bei der sich die Sensorfläche an Luft befindet. Im wesentlichen entspricht dieses der mathematischen Faltung aus Lampenspektrum und Monochromatortransmission. Die durchgezogene Linie entspricht der Messung in Gegenwart. von einem Puffer; diesem Spektrum ist die Oberflächenplasmonenresonanz überlagert. Durch Normierung auf das Spektrum in Luft wird das reine Oberflächenresonanzspektrum erhalten, wie es im unteren Teilbild von Fig. 8 dargestellt ist.
Zum Nachweis, daß es sich bei dem detektierten Einbruch im Spektrum um die Oberflächenplasmonenresonanz handelt, wird der Brechungsindex der Lösung variiert, indem in verschiedenen Sucrosekonzentrationen gemessen wird. Das obere Teilbild von Fig. 9 zeigt, wie sich der Einbruch im Spektrum mit steigender Sucrosekonzentration wie erwartet verschiebt. Eine Anpassung der Meßdaten mit einer Gauss-Funktion liefert numerische Werte für die Lage der Minima der Spektren. Mit dem bekannten Brechungsindex der Lösung kann daraus eine Kalibrierkurve erhalten werden, wie sie im unteren Teilbild von Fig. 9 zu sehen ist. Für einen ausreichend kleinen Bereich des Brechungsindexes wird hier näherungsweise ein linearer Zusammenhang angenommen. Im vorliegenden Beispiel wird eine Verschiebung von 1,4 nm für eine Brechungsindex-Änderung von 10⁻³ erhalten. Dabei gelingt es, das Minimum mit einer Genauigkeit von etwa 0,3 nm zu bestimmen, einem typischen Wert für eine Resonanzkurve von etwa 50 nm Halbwertsbreite. Dadurch können Brechungsindexänderungen von 2 · 10⁻⁴ nachgewiesen werden. Dies demonstriert die Sensitivität der Methode bei paralleler Messung von mehreren hundert oder tausend Proben innerhalb weniger Minuten.

### Bezugszeichenliste

- 1 -: planarer SPR-Sensor
- 10 -: Wellenleiterarray
- 11 -: Siliziumwafer
- 12 -: SiO₂-Schicht
- 13 -: Lichtwellenleiter
- 14 -: Wellenleiterstreifen
- 15 -: kammartige Ausnehmungen
- 16 -: SPR-fähige Schicht
- 17 -: Stirnfläche (Eintrittsfenster) des Lichtwellenleiters 13
- 20 -: CCD-Chip (Kamera)
- 3 -: Beleuchtungsquelle
- 4 -: IR-Filter
- 5 -: wellenlängenselektive Baugruppe
- 6 -: Polarisator
- 7 -: Umlenkspiegel
- 71 -: zweiter Umlenkspiegel
- 8 -: Mehrfachlochmaske
- 9 -: lichtstreuende Mittel
- 30 -: Computer
- 31 -: Steuerleitung
- 40 -: reflektierende Grenzflächen
- 50, 51-: Lichtleitfaser
- 60 -: Mikrotiterplatte
- 61 -: Probe in einer Kavität der Mikrotiterplatte 60
- 62 -: Kavitätenboden
- B -: Breite des SPR-fähigen Wellenleiters
- L -: Länge des SPR-fähigen Wellenleiters
- α -: Lichtein- und -austrittswinkel
- L1, L1', L2, L3, L4, L6, L7 -: optische Abbildungssysteme
- L5 -: Linsen

## Patentansprüche

1. Messanordnung für SPR-Messungen (SPR: surface plasmon resonance), umfassend:
ein Wellenleiterarray (10), das eine Vielzahl von planaren Wellenleitern (13) umfasst, in denen Licht über eine Lichteintrittsseite und eine Lichtaustrittsseite in mindestens einer Dimension geführt wird, und welche.jeweils mindestens zwei parallele Grenzflächen aufweisen, wobei die Abstände der einzelnen Wellenleiter (13) einem zweidimensionalen regelmäßigen Raster entsprechen und jeder einzelne Wellenleiter (13) mit einem SPR-fähigen Sensorgebiet (16) versehen ist,
eine Beleuchtungsquelle (3),
eine wellenlängenselektive Baugruppe (5) und ein optisches System (L2, L3), die der Beleuchtungsquelle (3) nachgeordnet sind, wobei das optische System (L2, L3) so ausgebildet ist, dass die Lichteintrittsseiten der Wellenleiter (13) des Wellenleiterarrays (10) mit parallelem Licht beleuchtet werden, wobei die wellenlängenselektive Baugruppe (5) ausgebildet ist die Wellenlänge des Lichts auf eine vorgegebene Lichtwellenlänge einzustellen,
eine Abbildungsoptik (L4; L6, L7) und ein CCD-Chip (20), welche so ausgebildet sind, dass das aus den Lichtaustrittsseiten der Wellenleiter (13) des Wellenleiterarrays (10) austretende Licht auf den CCD-Chip abgebildet wird, und das von jedem einzelnen Lichtwellenleiter (13) ausgehende Licht von jeweils mehreren benachbarten CCD-Pixeln des CCD-Chips (20) erfasst wird, und
einen Computer (30) mit Bildverarbeitungssoftware, welcher so ausgebildet sind, dass ein Lichtintensitätswert des von jedem einzelnen Lichtwellenleiter (13) ausgehenden Lichts errechnet wird, und nach Datenspeicherung von Intensitätswert, eingestellter Wellenlänge und Koordinate im Wellenleiterarray (10) über eine Steuerleitung (31) eine Verstellung der wellenlängeselektiven Baugruppe (5) auf eine weitere Lichtwellenlänge vorgenommen wird, zwecks Aufnahme eines Intensitätsspektrums.

2. Meßanordnung nach Anspruch 1, **dadurch gekennzeichnet, daß** der wellenlängenselektiven Baugruppe (5) ein Polarisator (6) nachgeordnet ist.

3. Meßanordnung nach Anspruch 1, **dadurch gekennzeichnet, daß** die Wellenleiter (13) derart kammartig ausgebildet sind, daß die SPR-fähigen Sensorgebiete (16) in die Kavitäten einer Mikrotiterplatte (60) einbringbar sind.

4. Meßanordnung nach Anspruch 1 oder 3, **dadurch gekennzeichnet, daß** der lichtaustrittsseitigen Seite des Wellenleiterarrays (10) lichtstreuende Mittel (9) zugeordnet sind.

5. Meßanordnung nach Anspruch 1, 3, oder 4, **dadurch gekennzeichnet, daß** der lichteintrittsseitigen Seite des Wellenleiterarrays (10) Ausblend- und/oder Absorptionsmittel zugeordnet sind, um zu gewährleisten, dass einzig aus den Wellenleitern austretendes Licht zum CCD-Chip (20) gelangt.

6. Meßanordnung nach Anspruch 5, **dadurch gekennzeichnet, daß** der lichteintrittsseitigen Seite des Wellenleiterarrays (10) Ausblendmittel in Form einer Mehrfachlochmaske (8) zugeordnet sind.

7. Meßanordnung nach Anspruch 3 oder 5, **dadurch gekennzeichnet, daß** die Ausblend- und/oder Absorptionsmittel derart zugeordnet sind, daß ausschließlich ein Lichteintritt in die Kavitätenbodenbereiche (62) einer Mikrotiterplatte (60) erfolgt, in denen die SPR-fähigen Sensoren angeordnet sind.

8. Meßanordnung nach Anspruch 3 oder 5, **dadurch gekennzeichnet, daß** die der lichteintrittsseitigen Seite des Wellenleiterarrays (10) zugeordneten Absorptionsmittel in Form einer Mikrotiterplatte gebildet sind, deren Kavitätenseitenwandungen aus einem lichtabsorbierenden Material gefertigt sind.

9. Meßanordnung nach Anspruch 5, **dadurch gekennzeichnet, daß** die der lichteintrittsseitigen Seite des Wellenleiterarrays (10) zugeordneten Absorptionsmittel in Form eines die Wellenleiter (13) voneinander trennenden lichtabsorbierenden Vergusses gebildet sind.

10. Meßanordnung nach Anspruch 1, **dadurch gekennzeichnet, daß** die wellenlängenselektive Baugruppe (5) durch einen schrittweise verstellbaren Monochromator gebildet ist und dem optischen Abbildungssystem (L2, L3) ein Umlenkspiegel (7) nachgeordnet ist, der eine Ausleuchtung der Lichteintrittsseiten der Wellenleiter (13) mit parallelem Licht unter einem geeigneten Winkel gewährleistet.

11. Meßanordnung nach Anspruch 10, **dadurch gekennzeichnet, daß** zusätzlich dem lichtaustrittsseitigem Ende des Wellenleiterarrays (10) direkt ein weiterer Umlenkspiegel (71) nachgeordnet ist, der die Abbildung des Wellenleiterarrays (10) auf ein zur optischen Achse geneigten CCD-Chip (20) gewährleistet.

12. Messverfahren für SPR-Messungen (SPR: surface plasmon resonance), umfassend:
Verwendung eines Wellenleiterarrays (10), das eine Vielzahl von planaren Wellenleitern (13) umfasst, in denen Licht über eine Lichteintrittsseite und eine Lichtaustrittsseite in mindestens einer Dimension geführt wird, und welche jeweils mindestens zwei parallele Grenzflächen aufweisen, wobei die Abstände der einzelnen Wellenleiter (13) einem zweidimensionalen regelmäßigen Raster entsprechen und jeder einzelne Wellenleiter (13) mit einem SPR-fähigen Sensorgebiet (16) versehen ist,
Beleuchten der Lichteintrittsseiten der Wellenleiter (13) des Wellenleiterarrays (10) mit parallelem Licht, mit einer Beleuchtungsquelle (3), einer wellenlängenselektive Baugruppe (5) und einem optischen System (L2, L3), wobei die wellenlängenselektive Baugruppe (5) die Wellenlänge des Lichts auf eine vorgegebene Lichtwellenlänge einstellt,
Abbilden des aus den Lichtaustrittsseiten der Wellenleiter (13) des Wellenleiterarrays (10) austretenden Lichts auf einen CCD-Chip (20) mit einer Abbildungsoptik (L4; L6, L7), und Erfassen des von jedem einzelnen Lichtwellenleiter (13) ausgehenden Lichts durch jeweils mehreren benachbarte CCD-Pixel des CCD-Chips (20), und
Errechnen eines Lichtintensitätswerts des von jedem einzelnen Lichtwellenleiter (13) ausgehenden Lichts mit einem Computer (30) mit Bildverarbeitungssoftware, und nach Datenspeicherung von Intensitätswert, eingestellter Wellenlänge und Koordinate im Wellenleiterarray (10), Verstellen der wellenlängeselektiven Baugruppe (5) auf eine weitere Lichtwellenlänge, zwecks Aufnahme eines Intensitätsspektrums.

13. Messverfahren nach Anspruch 12, **dadurch gekennzeichnet, daß** der wellenlängenselektiven Baugruppe (5) ein Polarisator (6) nachgeordnet ist.

14. Messverfahren nach Anspruch 12, **dadurch gekennzeichnet, daß** die Wellenleiter (13) derart kammartig ausgebildet sind, daß die SPR-fähigen Sensorgebiete (16) in die Kavitäten einer Mikrotiterplatte (60) einbringbar sind.

15. Messverfahren nach Anspruch 12 oder 14, **dadurch gekennzeichnet, daß** das Licht an der lichtaustrittsseitigen Seite des Wellenleiterarrays (10) mit lichtstreuenden Mitteln (9) gestreut wird.

16. Messverfahren nach Anspruch 12, 14, oder 15, **dadurch gekennzeichnet, daß** an der lichteintrittsseitigen Seite des Wellenleiterarrays (10) mit Ausblend- und/oder Absorptionsmitteln Licht ausgeblendet wird, um zu gewährleisten, dass einzig aus den Wellenleitern austretendes Licht zum CCD-Chip (20) gelangt.

17. Messverfahren nach Anspruch 16, **dadurch gekennzeichnet, daß** der lichteintrittsseitigen Seite des Wellenleiterarrays (10) Ausblendmittel in Form einer Mehrfachlochmaske (8) zugeordnet sind.

18. Messverfahren nach Anspruch 14 oder 16, **dadurch gekennzeichnet, daß** die Ausblend- und/oder Absorptionsmittel derart zugeordnet sind, daß ausschließlich ein Lichteintritt in die Kavitätenbodenbereiche (62) einer Mikrotiterplatte (60) erfolgt, in denen die SPR-fähigen Sensoren angeordnet sind.

19. Messverfahren nach Anspruch 14 oder 16, **dadurch gekennzeichnet, daß** die der lichteintrittsseitigen Seite des Wellenleiterarrays (10) zugeordneten Absorptionsmittel in Form einer Mikrotiterplatte gebildet sind, deren Kavitätenbeitenwandungen aus einem lichtabsorbierenden Material gefertigt sind.

20. Messverfahren nach Anspruch 16, **dadurch gekennzeichnet, daß** die der lichteintrittsseitigen Seite des Wellenleiterarrays (10) zugeordneten Absorptionsmittel in Form eines die Wellenleiter (13) voneinander trennenden lichtabsorbierenden Vergusses gebildet sind.

21. Messverfahren nach Anspruch 12, **dadurch gekennzeichnet, daß** die wellenlängenselektive Baugruppe (5) durch einen schrittweise verstellbaren Monochromator gebildet ist und dem optischen Abbildungssystem (L2, L3) ein Umlenkspiegel (7) nachgeordnet ist, um eine Ausleuchtung der Lichteintrittsseiten der Wellenleiter (13) mit parallelem Licht unter einem geeigneten Winkel zu gewährleisten.

22. Messverfahren nach Anspruch 20, **dadurch gekennzeichnet, daß** zusätzlich dem lichtaustrittsseitigem Ende des Wellenleiterarrays (10) direkt ein weiterer Umlenkspiegel (71) nachgeordnet ist, um die Abbildung des Wellenleiterarrays (10) auf ein zur optischen Achse geneigten CCD-Chip (20) zu gewährleisten.

## Claims

1. Measuring arrangement for SPR measurements (SPR: surface plasmon resonance), comprising:
a waveguide array (10), which comprises a plurality of planar waveguides (13), in which light is guided in at least one dimension via a light entrance side and a light exit side, and which have in each case at least two parallel boundary surfaces, wherein the distances of the individual waveguides (13) correspond to a two-dimensional regular grid and each individual waveguide (13) is provided with an SPR-compatible sensor region (16),
an illuminating source (3),
a wavelength-selective module (5) and an optical system (L2, L3), which are arranged downstream of the illuminating source (3), wherein the optical system (L2, L3) is designed so that the light entrance sides of the waveguides (13) of the waveguide array (10) are illuminated with parallel light, wherein the wavelength-selective module (5) is designed to set the wavelength of the light to a preset light wavelength,
an imaging optical system (L4; L6, L7) and a CCD chip (20), which are. designed so that the light emerging from the light exit sides of the waveguides (13) of the waveguide array (10) is reproduced on the CCD chip, and the light starting from each individual light waveguide (13) is detected by in each case several adjacent CCD pixels of the CCD chip (20), and
a computer (30) with image-processing software, which is designed so that a light intensity value of the light starting from each individual light waveguide (13) is calculated, and after data storage of intensity value, set wavelength and coordinate in the waveguide array (10) via a control line (31), adjustment of the wavelength-selective module (5) to a further light wavelength is carried out, for the purpose of recording an intensity spectrum.

2. Measuring arrangement according to claim 1, **characterised in that** a polariser (6) is arranged downstream of the wavelength-selective module (5).

3. Measuring arrangement according to claim 1, **characterised in that** the waveguides (13) are designed like a comb such that the SPR-compatible sensor regions (16) can be introduced into the cavities of a microtitre plate (60).

4. Measuring arrangement according to claim 1 or 3, **characterised in that** light-scattering means (9) are assigned to the light exit-side side of the waveguide array (10).

5. Measuring arrangement according to claim 1, 3, or 4, **characterised in that** masking and/or absorption means are assigned to the light entrance-side side of the waveguide array (10) in order to guarantee that only light emerging from the waveguides reaches the CCD chip (20).

6. Measuring arrangement according to claim 5, **characterised in that** masking means in the form of a multiple-hole mask (8) are assigned to the light entrance-side side of the waveguide array (10).

7. Measuring arrangement according to claim 3 or 5, **characterised in that** the masking and/or absorption means are assigned such that only light entrance into the cavity base regions (62) of a microtitre plate (60) takes place, in which the SPR-compatible sensors are arranged.

8. Measuring arrangement according to claim 3 or 5, **characterised in that** the absorption means assigned to the light entrance-side side of the waveguide array (10) are designed in the form of a microtitre plate, the cavity side walls of which are manufactured from a light-absorbing material.

9. Measuring arrangement according to claim 5, **characterised in that** the absorption means assigned to the light entrance-side side of the waveguide array (10) are designed in the form of a light-absorbing cast which separates the waveguides (13) from one another.

10. Measuring arrangement according to claim 1, **characterised in that** the wavelength-selective module (5) is formed by an incrementally variable monochromator and a deflecting mirror (7) is arranged downstream of the optical imaging system (L2, L3) and guarantees illumination of the light entrance sides of the waveguides (13) with parallel light at a suitable angle.

11. Measuring arrangement according to claim 10, **characterised in that** in addition, a further deflecting mirror (71) is arranged directly downstream of the light exit-side end of the waveguide array (10) and guarantees the reproduction of the waveguide array (10) on a CCD chip (20) at an angle to the optical axis.

12. Measuring process for SPR measurements (SPR: surface plasmon resonance), comprising:
use of a waveguide array (10), which comprises a plurality of planar waveguides (13), in which light is guided in at least one dimension via a light entrance side and a light exit side, and which have in each case at least two parallel boundary surfaces, wherein the distances of the individual waveguides (13) correspond to a two-dimensional regular grid and each individual waveguide (13) is provided with an SPR-compatible sensor region (16),
illuminating the light entrance sides of the waveguides (13) of the waveguide array (10) with parallel light using an illuminating source (3), a wavelength-selective module (5) and an optical system (L2, L3), wherein the wavelength-selective module (5) sets the wavelength of the light to a preset light wavelength,
reproducing the light emerging from the light exit sides of the waveguides (13) of the waveguide array (10) on a CCD chip (20) using an imaging optical system (L4; L6, L7), and detecting the light starting from each individual light waveguide (13) by in each case several adjacent CCD pixels of the CCD chip (20), and
calculating a light intensity value of the light starting from each individual light waveguide (13) using a computer (30) with image-processing software, and after data storage of intensity value, set wavelength and coordinate in the waveguide array (10), adjustment of the wavelength-selective module (5) to a further light wavelength, for the purpose of recording an intensity spectrum.

13. Measuring process according to claim 12, **characterised in that** a polariser (6) is arranged downstream of the wavelength-selective module (5).

14. Measuring process according to claim 12, **characterised in that** the waveguides (13) are designed like a comb such that the SPR-compatible sensor regions (16) can be introduced into the cavities of a microtitre plate (60).

15. Measuring process according to claim 12 or 14, **characterised in that** the light at the light exit-side side of the waveguide array (10) is scattered using light-scattering means (9).

16. Measuring process according to claim 12, 14, or 15, **characterised in that** light is masked at the light entrance-side side of the waveguide array (10) using masking and/or absorption means in order to guarantee that only light emerging from the waveguides reaches the CCD chip (20).

17. Measuring process according to claim 16, **characterised in that** masking means in the form of a multiple-hole mask (8) are assigned to the light entrance-side side of the waveguide array (10).

18. Measuring process according to claim 14 or 16, **characterised in that** the masking and/or absorption means are assigned such that only light entrance into the cavity base regions (62) of a microtitre plate (60) takes place, in which the SPR-compatible sensors are arranged.

19. Measuring process according to claim 14 or 16, **characterised in that** the absorption means assigned to the light entrance-side side of the waveguide array (10) are designed in the form of a microtitre plate, the cavity side walls of which are manufactured from a light-absorbing material.

20. Measuring process according to claim 16, **characterised in that** the absorption means assigned to the light entrance-side side of the waveguide array (10) are designed in the form of a light-absorbing cast which separates the waveguides (13) from one another.

21. Measuring process according to claim 12, **characterised in that** the wavelength-selective module (5) is formed by an incrementally variable monochromator and a deflecting mirror (7) is arranged downstream of the optical imaging system (L2, L3) in order to guarantee illumination of the light entrance sides of the waveguides (13) with parallel light at a suitable angle.

22. Measuring process according to claim 20, **characterised in that** in addition, a further deflecting mirror (71) is arranged directly downstream of the light exit-side end of the waveguide array (10) in order to guarantee the reproduction of the waveguide array (10) on a CCD chip (20) at an angle to the optical axis.

## Revendications

1. Dispositif pour effectuer des mesures SPR (SPR: résonance plasmonique de surface), comprenant :
une matrice de guides d'onde (10), comprenant une pluralité de guides d'ondes (13) plans, dans lesquels de la lumière est guidée par une face d'entrée de lumière et une face de sortie de lumière, en au moins une dimension, et qui présentent chacun au moins deux faces limites parallèles, les espacements des différents guides d'ondes (13) correspondant à une trame régulière bidimensionnelle et chaque guide d'onde (13) individuel étant muni d'une zone à capteur (16) à capacité SPR,
une source d'illumination (3),
un groupe (5) à sélectivité de longueur d'onde et un système optique (L2,L3), qui sont disposés en aval de la source d'illumination (3), le système optique (L2,L3) étant réalisé de manière que les faces d'entrée de lumière des guides d'ondes (13) de la matrice de guides d'ondes (10) soient illuminées par de la lumière parallèle, le groupe (5) à sélectivité de longueur d'onde étant réalisé pour régler la longueur d'onde de la lumière à une longueur d'onde de lumière prédéterminée,
une optique d'imagerie (L4;L6,L7) et une puce à éléments CCD (20), réalisées de manière que la lumière, sortant des faces de sortie de lumière des guides d'onde (13) de la matrice de guides d'ondes (10) soit imagée sur la puce CCD, et que la lumière sortant de chaque guide d'onde lumineuse (13) individuel soit détectée par chaque fois plusieurs pixels CCD voisins de la puce à éléments CCD (20), et un ordinateur (30) muni d'un logiciel de traitement d'image, réalisés de manière qu'une valeur d'intensité lumineuse, de la lumière sortant de chaque guide d'onde lumineuse (13) individuel, soit calculée et, après avoir procédé à une mémorisation des données concernant la valeur d'intensité, la longueur d'onde réglée et les coordonnées dans la matrice de guides d'onde (10), par l'intermédiaire d'une ligne de commande (31), un réglage du groupe (5) à sélectivité de longueur d'onde à une autre longueur d'onde lumineuse soit effectuée dans le but d'enregistrer un spectre d'intensité.

2. Dispositif de mesure selon la revendication 1, **caractérisé en ce que**, en aval du groupe (5) à sélectivité de longueur d'onde, est installé un polariseur (6).

3. Dispositif de mesure selon la revendication 1, **caractérisé en ce que** les guides d'onde (13) sont réalisés en peigne, de manière que les zones de capteur (16) à capacité SPR puissent être introduites dans les cavités d'une plaque de micro-titrage (60).

4. Dispositif de mesure selon la revendication 1 ou 3, **caractérisé en ce qu'**à la face située côté sortie de la lumière de la matrice de guides d'onde (10) sont associés des moyens de diffusion lumineuse (9).

5. Dispositif de mesure selon la revendication 1, 3 ou 4, **caractérisé en ce qu'**à la face située côté sortie de la lumière de la matrice de guides d'onde (10) sont associés des moyens d'occultation et/ou d'absorption pour assurer qu'arrive à la puce à éléments CCD (20) uniquement de la lumière sortant des guides d'ondes.

6. Dispositif de mesure selon la revendication 5, **caractérisé en ce qu'**à la face située côté entrée de la lumière de la matrice de guides d'onde (10) sont associés des moyens d'occultation se présentant sous la forme d'un masque à pluralité de trous (8).

7. Dispositif de mesure selon la revendication 3 ou 5, **caractérisé en ce que** les moyens d'occultation et/ou d'absorption sont associés de manière que soit effectuée exclusivement une entrée de lumière dans la zone de fond de cavité (62) d'une plaque de micro-titrage (60), dans lesquels sont disposés les capteurs à capacité SPR.

8. Dispositif de mesure selon la revendication 3 ou 5, **caractérisé en ce que** les moyens d'absorption, associés à la face, située côté entrée de la lumière, de la matrice de guides d'onde (10), sont formés sous forme de plaques de micro-titrage, dont les parois latérales de cavités sont fabriquées en un matériau absorbant la lumière.

9. Dispositif de mesure selon la revendication 5, **caractérisé en ce que** les moyens d'absorption, associés à la face, située côté entrée de la lumière, de la matrice de guides d'onde (10), sont réalisés sous forme d'un produit coulé, absorbant la lumière, séparant les uns des autres les guides d'ondes (13).

10. Dispositif de mesure selon la revendication 1, **caractérisé en ce que** le groupe (5) à sélectivité de longueur d'onde est formé par un mono-chromateur réglable pas à pas et, en aval du système d'imagerie optique (L2,L3), est installé un miroir de renvoi (7), assurant une occultation des faces d'entrée de lumière des guides d'ondes (13) par une lumière parallèle, au-dessous d'un angle approprié.

11. Dispositif de mesure selon la revendication 10, **caractérisé en ce qu'**en plus, en aval de l'extrémité située côté sortie de la lumière de la matrice de guides d'onde (10), est directement installé un autre miroir de renvoi (71), assurant l'imagerie de la matrice de guides d'onde (10) sur une puce à éléments CCD (20) inclinée par rapport à l'axe optique.

12. Procédé de mesure pour des mesures SPR (SPR: résonance plasmanique de surface), comprenant :
l'utilisation d'une matrice de guides d'onde (10), comprenant une pluralité de guides d'ondes plans, dans lesquels de la lumière est guidée par une face d'entrée de lumière et une face de sortie de lumière, en au moins une dimension, et qui présentent chacun au moins deux faces limites parallèles, les espacements entre les différents guides d'ondes (13) correspondant à une trame régulière bidimensionnelle et chaque guide d'onde (13) individuel étant muni d'une zone de capteurs (16) à capacité SPR,
l'élimination des faces d'entrée de lumière des guides d'onde (13) de la matrice de guides de lumière (10) par de la lumière parallèle avec une source d'illumination (3), d'un groupe (5) à sélectivité de longueur d'onde et d'un système (L2,L3) optique, le groupe (5) à sélectivité de longueur d'onde réglant la longueur d'onde de la lumière à une longueur d'onde lumineuse prédéterminée,
l'imagerie de la lumière sortant des faces de sortie de lumière des guides d'ondes (13) de la matrice de guides d'ondes (11) sur une puce à éléments CCD (20) avec une optique d'imagerie (L4; L6, L7), et détection de la lumière sortant de chaque guide d'onde lumineuse (13) individuel, au moyen de la pluralité des pixels CCD voisins de la puce à éléments CCD 20, et
calcul d'une valeur d'intensité de lumière de la lumière sortant de chaque guide d'ondes de lumière (13) individuel avec un ordinateur (30) muni d'un logiciel de traitement d'image, et, après stockage des données concernant la valeur d'intensité, de la longueur d'onde réglée et des coordonnées dans la matrice de guides d'ondes (10), réglage du groupe (5) à sélectivité de longueur d'onde, pour une autre longueur d'onde lumineuse, dans le but d'enregistrement d'un spectre d'intensité.

13. Procédé de mesure selon la revendication 12, **caractérisé en ce que**, en aval du groupe (5) à sélectivité de longueur d'onde, est installé un polariseur (6).

14. Procédé de mesure selon la revendication 12, **caractérisé en ce que** les guides d'ondes (13) sont réalisés en un genre de peigne, de manière que les zones de capteur à capacité SPR puissent être introduits dans les cavités d'une plaque de micro-titrage (60).

15. Procédé de mesure selon la revendication 12 ou 14, **caractérisé en ce que** la lumière, sur la face, située côté sortie de la lumière, de la matrice de guides d'ondes (10), est diffusée à l'aide de moyens photo-diffuseurs (9).

16. Procédé de mesure selon la revendication 12, 14 ou 15, **caractérisé en ce que**, sur la face, située du côté entrée de lumière, de la matrice de guides d'ondes (10), de la lumière est occultée à l'aide de moyens d'occultation et/ou d'absorption pour assurer qu'arrive à la puce à éléments CCD uniquement de la lumière sortant des guides d'onde.

17. Procédé de mesure selon la revendication 16, **caractérisé en ce que**, à la face, située du côté entrée de la lumière, de la matrice à guide d'onde (10), sont associés des moyens d'occultation réalisés sous la forme d'un masque à trous multiples (8).

18. Procédé de mesure selon la revendication 14 ou 16, **caractérisé en ce que** les moyens d'occultation et/ou d'absorption sont associés de manière que soit effectuée exclusivement une entrée de lumière dans les zones de fond des cavités (62) d'une plaque de micro-titrage (60), dans lesquelles sont disposés les capteurs à capacité SPR.

19. Procédé de mesure selon la revendication 14 ou 16, **caractérisé en ce que** les moyens d'absorption, associés à la face, située côté entrée de la lumière, de la matrice de guides d'onde (10), sont réalisés sous la forme d'une plaque de micro-titrage dont les parois latérales de cavités sont fabriquées à partir d'un matériau absorbant la lumière.

20. Procédé de mesure selon la revendication 16, **caractérisé en ce que** les moyens d'absorption, associés à la face, située du côté entrée de la lumière, de la matrice de guides d'onde (10), sont réalisés sous la forme d'un produit moulé absorbant la lumière, séparant les guides d'onde (13) les uns des autres.

21. Procédé de mesure selon la revendication 12, **caractérisé en ce que** le groupe (5) à sélectivité de longueur d'onde est formé par un monochromateur réglable pas à pas et, en aval du système d'imagerie optique (L2,L3), est installé un miroir de renvoi (7), pour assurer un éclairement des faces d'entrée de lumière des guides d'onde (13) avec de la lumière parallèle, sous un angle approprié.

22. Procédé de mesure selon la revendication 20, **caractérisé en ce que**, en plus de l'extrémité, située côté sortie de la lumière, de la matrice de guides d'onde (17), est installé en aval, directement, un autre miroir de renvoi (71), pour assurer l'imagerie de la matrice de guides d'onde (10), sur une puce à éléments CCD (20) inclinée par rapport à l'axe optique.
